# EUROPEAN PATENT SPECIFICATION

(11) **EP 4 150 425 B1**
(45) Date of publication and mention of the grant of the patent: **19.03.2025**
(21) Application number: 21803572.3
(22) Date of filing: 05.05.2021
(51) Int. Cl.: G05D 1/00, A01D 34/00

(54) **MOBILE SIGNAL GENERATOR FOR A ROBOTIC WORKING TOOL**
MOBILER SIGNALGENERATOR FÜR EIN ROBOTISCHES ARBEITSWERKZEUG
GÉNÉRATEUR DE SIGNAL MOBILE POUR UN OUTIL DE TRAVAIL ROBOTIQUE

(30) Priority: 14.05.2020 SE 2050566
(43) Date of publication of application: 22.03.2023
(73) Proprietor: Husqvarna AB, 561 82 Huskvarna (SE)
(72) Inventor: KOEHLER, Dennis, 89075 Ulm (DE); SCHWARZKOPF, Michael, 89231 Neu-Ulm (DE); ANDRIOF, Frederik, 89171 Illerkircherg (DE); WERNER, Gerhard, 88471 Laupheim (DE)
(86) International application number: PCT/SE2021/050417
(87) International publication number: WO 2021/230791

(56) References cited:
- WO-A1-03/104908
- WO-A1-2018/182478
- WO-A1-2018/199830
- WO-A1-99/38056
- WO-A1-99/38056
- US-A1- 2005 230 166
- US-A1- 2014 379 196
- US-A1- 2020 073 403
- US-A1- 2020 073 403

## Description

### TECHNICAL FIELD

This application relates to robotic working tools and in particular to a system and a method for providing a mobile signal generator for a robotic working tool, such as a lawnmower.

### BACKGROUND

Automated or robotic power tools such as robotic lawnmowers are becoming increasingly more popular. In a typical deployment a work area, such as a garden, the work area is enclosed by a boundary wire with the purpose of keeping the robotic lawnmower inside the work area. An electric control signal may be transmitted through the boundary wire thereby generating an (electro-) magnetic field emanating from the boundary wire. The robotic working tool is typically arranged with one or more (electro-) magnetic sensors adapted to sense the control signal.

As the seasons change, so does a work area and different areas of work area, such as a garden, may need to be serviced at different times of the year.

The patent application published as US2005230166A1 discloses a method and an electronic search system for operating an automatic device, preferably an automatic lawnmower. The system comprises at least one first electrical cable connected to at least one first signal generator and at least one sensing system arranged on said device. Said sensing system detects at least one magnetic field being transmitted via said cable and propagating through the air, the sensing system transmitting a processed signal to at least one driving means which contributes to the movements of said device in relation to a surface. Said search system comprises means by which the first signal generator of the present invention transmits a current through said first cable, said current during a part of time being is in a state of rest where it is substantially constant, said state periodically being interrupted by at least one first characteristic current pulse.

Thus, there is a need for a simple and elegant manner of enabling changing or assigning temporary work areas for a robotic working tool, such as a robotic lawnmower.

### SUMMARY

As will be disclosed in detail in the detailed description, the inventors have realized a simple and elegant solution to the problems of the prior art.

It is therefore an object of the teachings of this application to overcome or at least reduce those problems by providing a mobile signal generator arranged to provide a supplemental control signal through a supplemental wire for establishing a supplemental work area for a robotic working tool, said mobile signal generator being arranged without a charging unit for the robotic working tool as per the appended claims.

In one embodiment the mobile signal generator comprises a signal generator, arranged to generate the supplemental control signal, and a battery for providing power to the signal generator.

The mobile signal generator comprises a controller module configured to establish the supplemental control signal.

In one embodiment mobile signal generator comprises a communication interface, wherein the controller module is configured to establish the supplemental control signal by receiving information regarding the supplemental control signal through the communication interface from a charging station and/or a user.

The mobile signal generator further comprises a magnetic sensor arranged to sense the magnetic field generated by a control signal, wherein the controller module is configured to establish the supplemental control signal by receiving information regarding the control signal through the magnetic sensor and establish the supplemental control signal to be the same as the control signal.

In one embodiment the mobile signal generator is arranged to determine a drastic drop in sensed signal strength and in response thereto stop operation.

In one embodiment the mobile signal generator is arranged to determine that a critical battery level has been reached and in response thereto signal a stop command to the robotic working tool.

In one embodiment the mobile signal generator is arranged to adapt the strength of the supplemental control signal based on a length of the supplemental boundary wire.

In one embodiment the mobile signal generator comprises two ports for connecting a single supplemental boundary wire.

In one embodiment the mobile signal generator is arranged outside the supplemental work area.

In one embodiment the mobile signal generator is arranged to be used in a robotic working tool system comprising a signal generator, arranged to generate and transmit a control signal through a boundary wire, the robotic working tool and a charging station for charging the robotic working tool in.

In one embodiment the robotic working tool is a robotic lawnmower.

It is also an object of the teachings of this application to overcome the problems by providing a method for use in a mobile signal generator arranged to provide a supplemental control signal through a supplemental wire for establishing a supplemental work area for a robotic working tool, said mobile signal generator being arranged without a charging unit for the robotic working tool, the method comprising establishing the supplemental control signal and transmitting the supplemental control signal as per the appended claims.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic working tool exemplified by a robotic lawnmower;
Figure 1B shows a schematic view of the components of an example of a robotic working tool exemplified by a robotic lawnmower;
Figure 2 shows an example of a robotic working tool system being a robotic lawnmower system;
Figure 3A shows a schematic view of a robotic working tool system according to an example embodiment of the teachings herein;
Figure 3B shows a schematic view of a robotic working tool system according to an example embodiment of the teachings herein;
Figure 3C shows a schematic view of a robotic working tool system according to an example embodiment of the teachings herein;
Figure 4 shows a schematic view of the components of a mobile signal generator according to an example embodiment of the teachings herein;
Figure 5 shows a corresponding flowchart for a method according to an example embodiment of the teachings herein; and
Figure 6 shows a schematic view of sensed signal strengths.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic working tools where lift detection is used and where the robotic working tool is susceptible to dust, dirt or other debris.

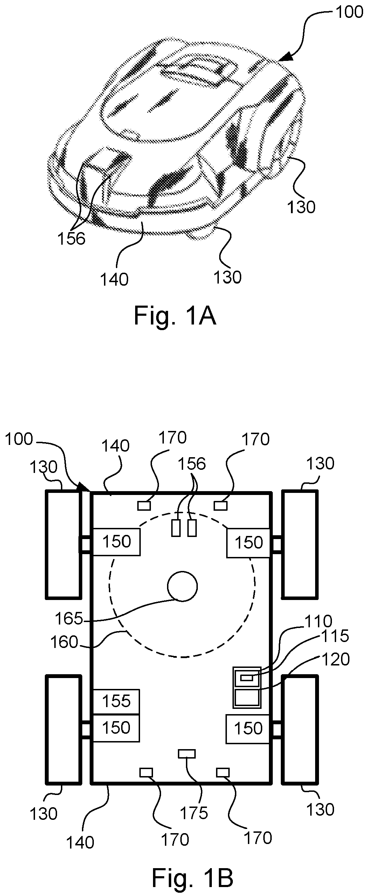

Figure 1A shows a perspective view of a robotic working tool 100, here exemplified by a robotic lawnmower 100, having a body 140 and a plurality of wheels 130 (only one side is shown). The robotic working tool 100 may be a multi-chassis type or a mono-chassis type. A multi-chassis type comprises more than one body parts that are movable with respect to one another. A mono-chassis type comprises only one main body part.

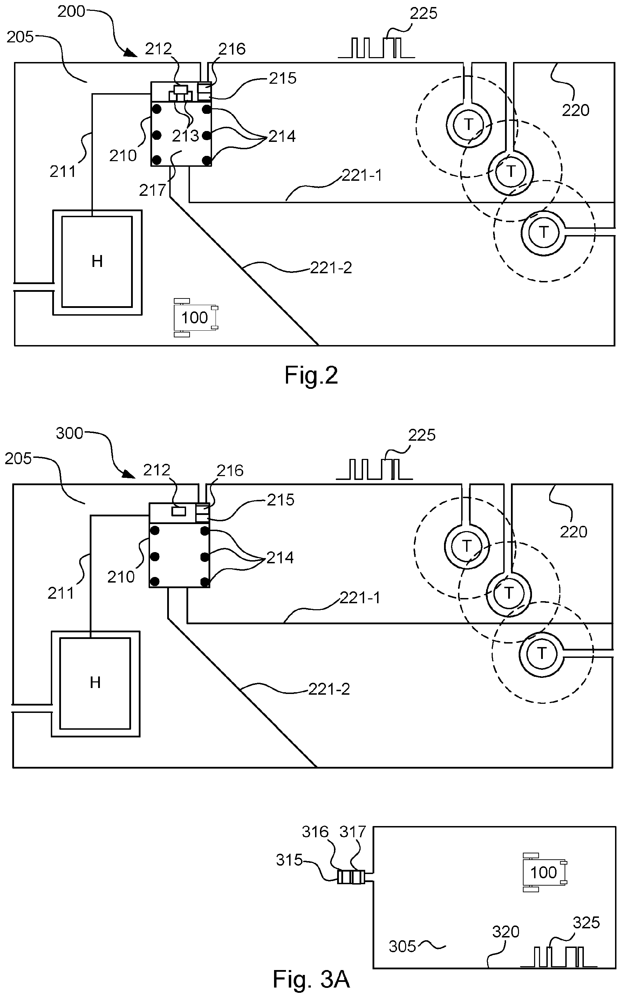

The robotic lawnmower 100 comprises charging skids 156 for contacting contact plates (not shown in figure 1, but referenced 213 in figure 2) when docking into a charging station (not shown in figure 1, but referenced 210 in figure 2) for receiving a charging current through, and possibly also for transferring information by means of electrical communication between the charging station and the robotic lawnmower 100. Other means of establishing a charging contact are possible and are incorporated herein.

Figure 1B shows a schematic overview of the robotic working tool 100, also exemplified here by a robotic lawnmower 100. In this example embodiment the robotic lawnmower 100 is of a mono-chassis type, having a main body part 140. The main body part 140 substantially houses all components of the robotic lawnmower 100. The robotic lawnmower 100 has a plurality of wheels 130. In the exemplary embodiment of figure 1B the robotic lawnmower 100 has four wheels 130, two front wheels and two rear wheels. At least some of the wheels 130 are drivably connected to at least one electric motor 150. It should be noted that even if the description herein is focused on electric motors, combustion engines may alternatively be used, possibly in combination with an electric motor.

The robotic lawnmower 100 also comprises a grass cutting device 160, such as a rotating blade 160 driven by a cutter motor 165. The grass cutting device being an example of a work tool 160 for a robotic working tool 100. The robotic lawnmower 100 also has (at least) one battery 155 for providing power to the motor(s) 150 and/or the cutter motor 165. The battery is arranged to be charged through a current received through charging skids 156 - or other suitable charging connectors.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion of the robotic lawnmower. The controller 110 may be implemented using any suitable, available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic lawnmower 100 may further be arranged with a wireless communication interface 115 for communicating with other devices, such as a server, a personal computer or smartphone, the charging station, and/or other robotic working tools. Examples of such wireless communication devices are Bluetooth^{®}, WiFi^{®} (IEEE802.11b), Global System Mobile (GSM) and LTE (Long Term Evolution), to name a few.

For enabling the robotic lawnmower 100 to navigate with reference to a boundary wire emitting a magnetic field caused by a control signal transmitted through the boundary wire, the robotic lawnmower 100 is further configured to have at least one magnetic field sensor 170 arranged to detect the magnetic field (not shown) and for detecting the boundary wire and/or for receiving (and possibly also sending) information to/from a signal generator (will be discussed with reference to figure 2). In some embodiments, the sensors 170 may be connected to the controller 110, possibly via filters and an amplifier, and the controller 110 may be configured to process and evaluate any signals received from the sensors 170. The sensor signals are caused by the magnetic field being generated by the control signal being transmitted through the boundary wire. This enables the controller 110 to determine whether the robotic lawnmower 100 is close to or crossing the boundary wire, or inside or outside an area enclosed by the boundary wire.

In one embodiment, the robotic lawnmower 100 may further comprise at least one navigation sensor 175. In one embodiment, the navigation sensor 175 comprises one or more sensors for deduced navigation. Examples of sensors for deduced reckoning are odometers, accelerometers, gyroscopes, and compasses to mention a few examples. In one embodiment, the navigation sensor 175 comprises a beacon navigation sensor and/or a satellite navigation sensor 190. The beacon navigation sensor may be a Radio Frequency receiver, such as an Ultra Wide Band (UWB) receiver or sensor, configured to receive signals from a Radio Frequency beacon, such as a UWB beacon. Alternatively or additionally, the beacon navigation sensor may be an optical receiver configured to receive signals from an optical beacon. The satellite navigation sensor may be a GPS (Global Positioning System) device or other Global Navigation Satellite System (GNSS) device.

Figure 2 shows a schematic view of a robotic working tool system 200. The schematic view is not to scale. The robotic working tool system 200 comprises a robotic working tool 100. As with figures 1A and 1B, the robotic working tool is exemplified by a robotic lawnmower, whereby the robotic working tool system may be a robotic lawnmower system or a system comprising a combinations of robotic working tools, one being a robotic lawnmower, but the teachings herein may also be applied to other robotic working tools adapted to operate within a work area.

The robotic working tool system 200 also comprises charging station 210 which is arranged with a signal generator 215 and a boundary wire 220.

The signal generator is arranged to generate a control signal 225 to be transmitted through the boundary wire 220. To perform this, the signal generator is arranged with a controller and memory module 216. The controller and memory module 216 operates and functions in a similar manner as the controller 110 and memory 120 of the robotic working tool 100. The controller and memory module 216 may also be the controller and memory module of the charging station, hereafter simply referred to as the controller 216.

In one alternative or additional embodiment the controller and memory module 216 may also comprise or be connected to a communication interface (not shown explicitly but considered to be part of the controller and memory module). The communication interface is enabled for communicating with other devices, such as a server, a personal computer or smartphone, a robotic working tool 100, another signal generator and/or another charging station using a wireless communication standard. Examples of such wireless communication standards are Bluetooth^{®}, WiFi^{®} (IEEE802.11b), Global System Mobile (GSM) and LTE (Long Term Evolution), to name a few.

The boundary wire 220 is arranged to enclose a work area 205, in which the robotic lawnmower 100 is supposed to serve. The control signal 225 transmitted through the boundary wire 220 causes a magnetic field (not shown) to be emitted. In one embodiment the control signal 225 is a sinusoid periodic current signal. In one embodiment the control signal 225 is a pulsed current signal comprising a periodic train of pulses. In one embodiment the control signal 225 is a coded signal, such as a CDMA signal.

As an electrical signal is transmitted through a wire, such as the control signal 225 being transmitted through the boundary wire 220, a magnetic field is generated. The magnetic field may be detected using field sensors, such as Hall sensors. A sensor - in its simplest form - is a coil surrounding a conductive core, such as a ferrite core. The amplitude of the sensed magnetic field is proportional to the derivate of the control signal. A large variation (fast and/or of great magnitude) results in a high amplitude for the sensed magnetic field. The variations are sensed and compared to a reference signal or pattern of variations in order to identify and thereby reliably sense the control signal.

The work area 205 is in this application exemplified as a garden, but can also be other work areas as would be understood. The garden contains a number of obstacles (O), exemplified herein by a number (3) of trees (T) and a house structure (H). The trees are marked both with respect to their trunks (filled lines) and the extension of their foliage (dashed lines). As can be seen in figure 2, the boundary wire 220 has been laid so that so-called islands are formed around the trees' trunks and the house (H). This requires that more boundary wire is used, than if the work area was without such obstacles. It should be noted that any distances between wires are greatly exaggerated in this application in order to make the distances visible in the drawings.

As can also be seen in figure 2, the charging station 210 is fastened into the ground by one or several pegs 214 in order to keep the charging station stable as the robotic lawnmower 100 drives up on it to be charged, and off it once charged and ready to operate. The charging station 210 is also, for the same reason, arranged with a bottom plate 217 that is designed to be larger than the corresponding robotic lawnmower 100. As a skilled person would understand, the larger the bottom plate 217, the more stable the installation. The bottom plate 217 is therefore usually rather bulky.

The charging station 210 also comprises a charging unit 212, connected to two charging plates 213, for delivering a charging current to the robotic lawnmower 100 upon docking. The charging unit 212 is connected to a power supply 211. As the charging requires significant current, the power supply 211 is external. Usually, the charging station is simply connected to a wall outlet in a house or similar structure.

In addition to the boundary wire 220, the charging station is also, usually, connected to one or more guide wires 221. Guide wires 221 may be used to enable the robotic lawnmower 10 to find its way to a specific area, such as into (and/or out of) areas that are difficult to reach. Guide wires 221 may alternatively or additionally be used to enable the robotic lawnmower 10 to find its way to the charging station 210. Guide wires 221 may alternatively or additionally be used to divide a work area 205 into two separate work areas. In the example of figure 2, there are two guide wires, a first guide wire 221-1 arranged to lead the robotic lawnmower 100 in to the area behind the trees T, and a second guide wire 221-2 arranged to lead the robotic lawnmower 100 to the charging station 210. The second guide wire 221-2 may also or alternatively be used to divide the work area 205 into two halves, one to the left of the second guide wire 221-2 and one to the right of the second guide wire 221-2.

The use of guide wires 221 to demarcate work areas has been around for several years, and a skilled person would understand how such uses may be implemented without further details.

The inventors have realized and identified several problems associated with using guide wires 221 to demarcate a work area 205.

One problem that has been realized is that there is only a limited number of ports for guide wires 221 in a charging station, and the number of sub-areas is thus limited. A number of technical solutions have been proposed over the years of how to utilize a limited guide wire to establish several (i.e. more) sub areas. All these proposal - ingenious as they may be - may be difficult for an end-user to understand and to correctly plan for.

Another problem lies in that as the guide wire 221-2 need be connected to the charging station 210, it is difficult to install the guide wire for a sub-area far away from the charging station 210. Especially if there are obstacles that should not be disturbed in the way between the wanted subarea and the charging station 210.

A similar problem lies in that guide wires 221-2 are not allowed by safety standards to extend beyond the boundary wire 220, whereby they are useless for setting up a sub area outside the work area 205. The obvious solution to setting up such a remote o external sub area is to simply move the charging station and set up a new boundary wire. However, as the charging station 210 is pegged down, needs to be connected to a power supply 211 and as all guide wires 221 as well as the original boundary wire 220 need be disconnected, this is not such a simple task as technically skilled users may believe, especially not for most end-users who may lack in practical or technical skills as their expertise may lay elsewhere in non-technical fields. As is known, persons skilled in areas such as finance, business methods, mathematics, computer software, psychology, and aesthetics often lack technical knowledge.

The charging station 210 may also be heavy or otherwise cumbersome to carry or transport making it unsuitable to be moved.

The inventors are therefore - after insightful and inventive reasoning - proposing the simple and elegant solution of providing a mobile signal generator that can be used at any location for setting up a boundary to demark a sub area, remotely or internally to an existing work area 205.

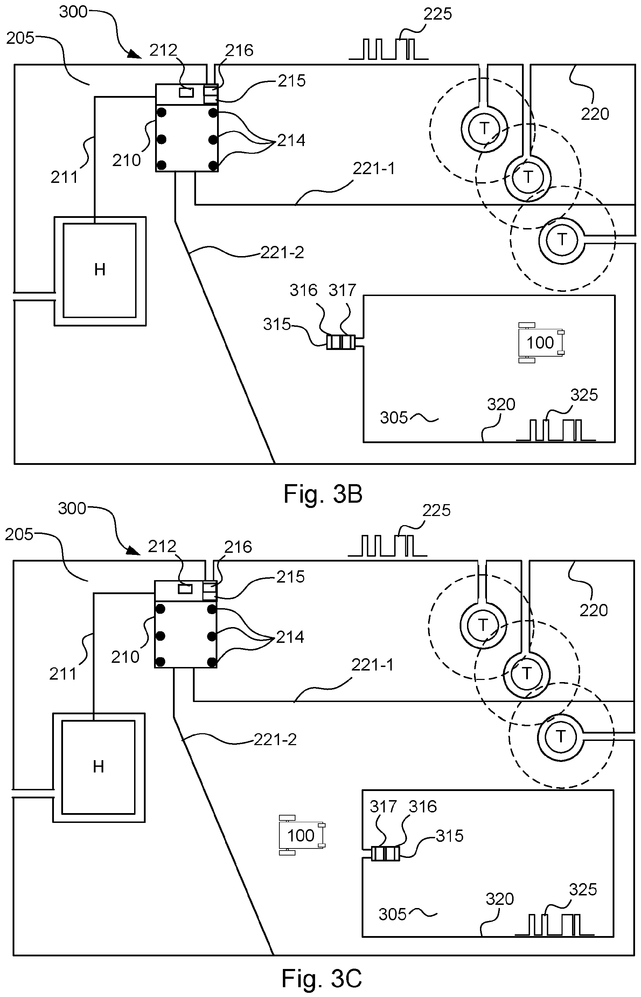

Figures 3A, 3B and 3C each shows an example embodiment of a robotic working tool system 300, herein exemplified by a robotic lawnmower system, according to an embodiment of the teachings herein. **In** figure 3A, the sub area or supplemental 305 is external to the existing work area 205. **In** figures 3B and 3C, the sub area or supplemental 305 is internal to the existing work area 205, where the robotic lawnmower is inside the supplemental area in figure 3B and outside of it in figure 3C. It can also be noted that the mobile signal generator 315 need not be arranged inside a work area as it need not be accessed by the robotic lawnmower 100. It may even be beneficial to place the mobile signal generator 315 outside the supplemental work area as it is then (better) protected from the robotic lawnmower 100 during operation. Figures 3A and 3B shows a situation where the mobile signal generator 315 is arranged outside the supplemental work area 305 and figure 3C shows a situation where the mobile signal generator 315 is arranged inside the supplemental work area 305.

An external supplemental work area 305 may be used for temporarily setting up a work area externally, such as when an area needs to be worked on or such as when lending ones robotic lawnmower to a friend or neighbour. An external supplemental work area 305 may also or alternatively be used for a secondary home, such as a summer cabin. This allows for an easy installation and for theft protection as the mobile signal generator 315 may be easily (as will be discussed below) transported to and from the cabin along with the robotic lawnmower 100.

An internal supplemental work area 305 may be used for temporarily setting up a work area internally, such as when an area needs to be worked on specifically or when an area is not to be worked on. In the latter case, the supplemental work area 305 can be used to keep a robotic lawnmower 100 out of it, protecting what is inside the supplemental work area 305, or alternatively, the supplemental work area 305 can be used to keep a robotic lawnmower 100 inside it, protecting what is outside the supplemental work area 305. In figure 3B the supplemental area is used to keep the robotic lawnmower inside supplemental area to provide particular operation in that area. In figure 3C the supplemental area is used to keep the robotic lawnmower outside the supplemental area to prevent operation in that area.

In one embodiment the supplemental work area 305 is determined to be a stay-in-area by attaching the boundary wires to the connector ports in a first (standard) manner, and the supplemental work area 305 is determined to be a stay-out-area by attaching the boundary wires to the connector ports in a second (opposite) manner. In an embodiment, the wires are connected to a connector that attaches to the connector ports on the mobile signal generator. By simply turning the wire connector, the boundary wire may be connected in the first or the second manner in a simple manner.

In one embodiment the supplemental work area 305 is determined to be a stay-in-area by transmitting the control signal in a first (standard) manner, and the supplemental work area 305 is determined to be a stay-out-area by transmitting the control signal in a second (reverse polarity) manner. In one such embodiment, the mobile signal generator is configured to receive a command to switch (or reverse) the polarity of the control signal. In one embodiment, the mobile signal generator comprises a switch or button (possibly virtual) as part of the user interface, arranged for switching the polarity of the control signal as transmitted, based on the position of the switch. This enables an operator to simply flip the switch (or push the button) to determine the kind of supplemental work area to be used. The switch may be marked appropriately to indicate its use. In an alternative or additional embodiment the mobile signal generator is arranged to receive a command through the communication interface (for example from a user device) indicating which polarity and thus which use of the supplemental area) that is to be used. This enables a user to simply set up the mobile signal generator for example through a smartphone of the user.

In one embodiment the supplemental work area 305 is determined to be a stay-in-area by arranging the mobile signal generator and the attached or connected boundary wire in a first (standard) manner or position, and the supplemental work area 305 is determined to be a stay-out-area by arranging the mobile signal generator and the attached or connected boundary wire a second (opposite) manner or position. In such an embodiment it is possible to set up the mobile signal generator and the attached boundary wire (especially useful in embodiments where the boundary wire is internally connected) to provide a stay-in or stay-out area by simply placing the mobile signal generator up-side-up or up-side-down. As the mobile signal generator is flipped, so should the boundary wire also be, and the supplemental area is determined accordingly to be stay-in or stay-out.

In one embodiment, the mobile signal generator comprises two sets of connector ports; a first set and a second set. In one such embodiment the supplemental work area 305 is determined to be a stay-in-area by connecting the boundary wire to the first connector port set, and the supplemental work area 305 is determined to be a stay-out-area by connecting the boundary wire to the second connector port set. In one embodiment, the first set is arranged on one side of the mobile signal generator, and the second set is arranged on another side of the mobile signal generator.

The robotic lawnmower system 300 comprises in addition to all or some of the components of the robotic lawnmower system 200 as discussed in relation to figure 2, a mobile signal generator 315. As for the signal generator 215 of the charging station 210, the mobile signal generator 315 comprises a controller module 316 for controlling the operation of the mobile signal generator 315.

The inventors have realized that by arranging the mobile signal generator 315 without a charging unit 212 or other charging means for the robotic lawnmower 100 the mobile signal generator 315 therefore does not require any high-power power supply, such as a wall outlet. In fact, as the inventors have realized, as the main purpose of the mobile signal generator 315 is only to provide a control signal, which are even required to operate at low current levels, the mobile signal generator 315 only comprises a battery 317 for providing power to the mobile signal generator 315.

Furthermore, as the mobile signal generator 315 is not arranged to charge the robotic lawnmower 100, the mobile signal generator also does not need to be pegged down or to have a bulky bottom plate, whereby the mobile signal generator 315 may be designed to have a sleek and small overall size and extent, as well as being low-weight.

The mobile signal generator 315 according to herein is thus possible to provide in a physical implementation weighing less than a kilogram and having a physical extent of less than 10 dm³, even 5 dm³, making the mobile signal generator 315 according to herein truly mobile.

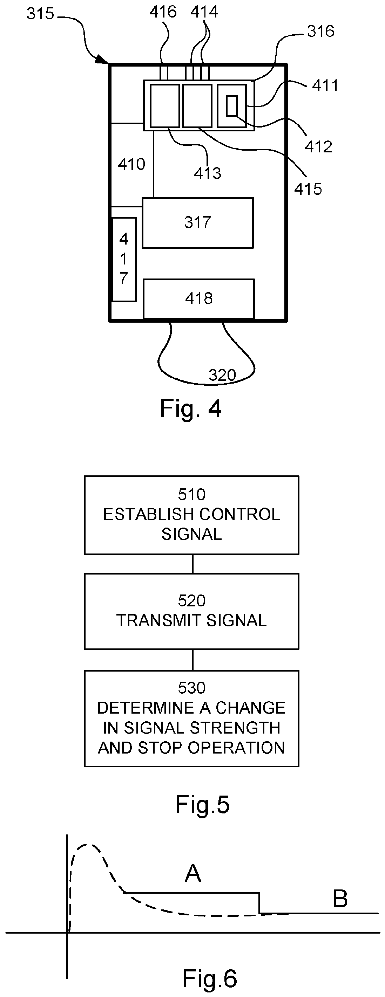

Additionally, in one embodiment, the mobile signal generator is arranged with ports (referenced 414 in figure 4) only for a few supplementary boundary wires 320. In one such embodiment, the number of ports correspond to two wires. In another embodiment, the number of ports is two, corresponding to a single supplementary boundary wire 320 further reducing the needed size of the mobile signal generator 315.

Figure 4 shows a schematic view of the components of a mobile signal generator 315 according to herein. As discussed above, the mobile signal generator 315 comprises a controller module 316. In one embodiment the controller module 316 comprises a processor (or other controller) 411 and a memory 412. The processor 411 and memory 412 may be arranged to operate in a similar manner as the controller 110 and memory 120 of the robotic lawnmower 100 and no further details will be given thereto. **In** one embodiment the controller module 316 also comprises a signal generator 415 arranged to generate and transmit a supplemental control signal 325 through the supplemental boundary wire 320 when connected to the ports 414. **In** the example of figure 4, there are two connector ports 414 for connecting one supplemental boundary wire 320.

**In** one embodiment the controller module 316 may also comprise a communication interface 413 for communicating with the charging station 210 for receiving settings regarding for example the control signal 225, or with another device for example for receiving commands or settings from a user. **In** one embodiment, the communication interface 413 comprises a wireless interface, such as discussed in relation to the communication interface 115 of the robotic lawnmower 100 as well as in connection to the communication interface of the controller module 216 of the charging station 210 above. **In** one embodiment, the communication interface 413 comprises or is connected to a wired interface, such as a universal serial bus (USB) interface. This allows the mobile signal generator 315 to be connected to, by being plugged in to, for example the charging station 210 for receiving settings regarding the control signal 225.

The mobile signal generator 315 may thus receive information from the charging station 210, either by being plugged in to or through a wireless connection, regarding the control signal 225 used for the main boundary wire 220, or for any signal used for a guide wire, which enables the mobile signal generator 315 to mimic the signal generator 215 of the charging station 210, whereby the same robotic lawnmower 100 may be used without any modifications needed to be done or settings to be changed on the robotic lawnmower 100.

Furthermore, by connecting to a second charging station and receiving information regarding that charging stations signals, the mobile signal generator 315 may be arranged to be used with a different system as well, the mobile signal generator thus being mobile also in respect of which system and/or robotic lawnmower the mobile signal generator 315 supplements.

In one embodiment the mobile signal generator 315 comprises a magnetic sensor 416, for example such as the magnetic sensors 170 discussed above in relation to the robotic lawnmower 100. This enables the mobile signal generator 315 to sense and record any control signal that is transmitted through any wire. The mobile signal generator 315 is thus arranged to supplement any signal generator, even such that are not designed or arranged to share information regarding the control signal being used. The mobile signal generator 315 according to herein may thus also be used with and to supplement almost any prior art robotic lawnmower system without any modification having to be made to neither the charging station nor the robotic lawnmower of the prior art system.

In such embodiments discussed above, the supplemental control signal 325 is thus effectively the same as the control signal 225.

The mobile signal generator 315 is in one embodiment arranged to use a different control signal than the control signal 225 of the signal generator 215 of the charging station 210. In such embodiments, the supplemental control signal 325 is thus effectively not the same as the control signal 225. In such embodiments, the charging station may be arranged to provide the mobile signal generator 315 with a control signal that the robotic lawnmower 100 will accept. Additionally or alternatively, the charging station may be arranged to provide the robotic lawnmower 100 with the control signal that will be used by the mobile signal generator 315. In one such embodiment, the mobile signal generator 315 is arranged to provide the charging station with information on which control signal that will be used. Enabling the mobile signal generator to operate with a control signal that is different from that of the main system, enables for the use of two (or more) robotic lawnmowers to operate in the same work area as both will be provided with a control signal. The two robotic lawnmowers may also be set up to work in different areas (possibly overlapping at least partially).

The mobile signal generator 315 may also, in some embodiments, comprise a user interface 417. The user interface may be provided as at least one physical button, a series of (LED) lights, a screen such as a touch screen, or any other known manner of providing a user interface. In one embodiment, the user interface is comprised of one or two push buttons; one for turning on the generator, and possibly one for establishing the control signal 325, as well as at least one LED light for indicating battery and/or operational status (including, but not limited to, one or all of the status of the mobile signal generator (on/off), the status of the supplemental control signal, or status of the supplemental boundary wire 320). Such a simple interface is highly energy efficient.

Alternatively, the user interface 417 is provided (at least partially) through a secondary device through the communication interface 413, whereby the mobile signal generator 315 may be controlled through a second device, such as a smartphone, being connected to the mobile signal generator 315.

The mobile signal generator 315 also comprises a battery 317. In one embodiment the battery is arranged with or connected to a charging port 410 for receiving a charging current through. The charging port 410 is in one embodiment wireless. Alternatively or additionally, the charging port 410 is in one embodiment wired. In one such embodiment, the charging port 410 is connected to the wired interface of the communication interface 413 as is indicated in figure 4, by the charging port 410 being connected to both the battery 317 and the controller module 316. In one particular such embodiment a common USB interface is used both for the communication interface 413 and for the charging port 410. In one embodiment the charging port is a solar panel for enabling solar powered charging. In one embodiment, the battery and the charging port are part of or comprised in a solar panel arrangement, wherein the mobile signal generator is solar powered.

In one embodiment, the mobile signal generator 315 is configured to adapt the strength of the supplemental control signal based on the length of the supplemental boundary wire 320. This allows for energy to be saved, thereby increasing the operating time for the mobile signal generator, and/or allowing for a reduced size of the battery and therefore making the mobile signal generator 315 even more mobile.

In one such embodiment, the mobile signal generator 315 is arranged to receive an indication of the wire length through the communication interface 413. Alternatively or additionally, the mobile signal generator 315 may be arranged to receive the indication of the wire length through the user interface 417. A user may thus, for example, input the length of the boundary wire being used either through the user interface 417 or through a separate device such as a smart phone.

In one alternative or additional such embodiment, the mobile signal generator 315 is arranged to receive an indication of the wire length by measuring the length of the wire. The length can be measured or approximated by measuring the resistance in the wire. Assuming a specific thickness and/or resistance per unit of length, the resistance will be proportional to the length and a measurement of the resistance will therefore give an indication of the length of the wire. The measurement may be done at any point where a known voltage is applied to the wire, by measuring the resulting current.

The mobile signal generator 315 may also comprise a wire spool or reel 418 on which a wire can be wound up for easy storage. As the mobile signal generator is primarily to be used for supplemental work areas 305, which assembly are of a smaller size, normally a shorter supplemental boundary wire is needed. Such a shorter wire may therefore be wound up internally for easy and simple storage and transport. Exactly how long the wire can be depends on the current design. Having an internal spool 418 also allows for a simple attachment to the ports 414 and the boundary wire thus may not need to be disconnected for transport.

Figure 5 shows a flowchart of a general method according to the teachings herein. The mobile signal generator 315 establishes which control signal will be used. As discussed above, the control signal may be established by the mobile signal generator 315 receiving information regarding the control signal from the charging station. Alternatively, the mobile signal generator 315 receives information regarding the control signal from a user. In yet an alternative, the mobile signal generator 315 receives information regarding the control signal from a sensor 416. The sensor may be similar to the magnetic field sensor 170 of the robotic lawnmower.

And also as an alternative, the mobile signal generator 315 establishes the control signal to be used by providing information regarding the control signal to the charging station. These alternatives are not exclusive but may be in addition to one another. For example, the mobile signal generator 315 may both receive information regarding the control signal from the sensor 416 and provide this information to the charging station 210. As the supplemental control signal has been established, the supplemental control signal is transmitted 520 through the supplemental boundary wire 320.

In one embodiment, the mobile signal generator is configured to determine whether the supplemental area is set up as a stay-in-area or as a stay-out-area.

In one such embodiment, the mobile signal generator may adapt its operation based on whether the supplemental area is set up as a stay-in-area or as a stay-out-area. The operation may be adapted as regards what action is to be taken if the control signal is lost.

In an alternative or additional embodiment, the mobile signal generator is arranged to signal or present the use of the supplemental area to a user through the communication interface and/or through the user interface.

In one embodiment, the mobile signal generator is configured to determine whether the supplemental area is set up as a stay-in-area or as a stay-out-area by determining the position of a switch (as discussed above)

In an alternative or additional embodiment where the mobile signal generator is arranged with a magnetic sensor 416, the mobile signal generator is configured to determine whether the supplemental area is set up as a stay-in-area or as a stay-out-area by sensing the resulting magnetic field being emitted by the transmitted control signal.

In one embodiment where the mobile signal generator is arranged with a magnetic sensor 416, the mobile signal generator is configured to determine whether the control signal from the main system (i.e the control signal 225) is detectable. If the signal is not detectable, the mobile signal generator may be arranged to interrupt all operations. This is also useful for preventing theft of the robotic lawnmower or the mobile signal generator, as it will only be able to operate in the vicinity of the main or original system.

In another or alternative such embodiment, the mobile signal generator is arranged to determine 'the main control signal 225, to compare it to a storage of known control signals and only operate if a match is found. This enables the mobile signal generator to only operate with preapproved systems, which enables for an increased safety of use as only trusted systems may be used with the mobile signal generator.

As is known, a robotic lawnmower 100 is configured to stop operating as a control signal is lost. This is in order to prevent the robotic lawnmower 100 from escaping the work area in case of a power failure of the signal generator. However, and as the inventors have realized, if an internal supplemental area 305 is being used for keeping the robotic lawnmower 100 inside the supplemental area 305 and with the same supplemental control signal 325 as the control signal 225, the robotic lawnmower 100 will still sense the control signal 225 even after the supplemental control signal 325 dies or is otherwise lost. This will inevitably lead to the robotic lawnmower 100 escaping the supplemental area 305. The inventors have, however, realized a simple and elegant solution to this. By configuring the robotic lawnmower 100 to not only stop operation if a signal is lost, but also stop operation if there is a sudden drop in sensed signal strength, the robotic lawnmower 100 is enabled to detect when the supplemental control signal is lost.

In one embodiment where the mobile signal generator 315 is arranged with a sensor 416, the mobile signal generator 315 may be configured to also sense the overall control signal and to sense a drastic or sudden change in signal strength, and thereby determine that the main control signal has been lost and in response thereto stop operation of the robotic lawnmower 100. The operation may be stopped by communicating to the robotic lawnmower 100 to stop. Alternatively or additionally the operation maybe stopped by simply discontinuing the supplemental control signal which effectively will cause the robotic lawnmower 100 to stop as all control signals are lost.

In one embodiment the sudden drop or change is characterized by a change in signal strength of 30 %, 40 %, 50 % or a higher percentage of the sensed signal strength.

The mobile signal generator 315 (and/or the robotic lawnmower) may thus 530 sense a change in the signal and stop operation accordingly. In one embodiment, the mobile signal generator 315 is configured to detect that the battery level has reached a critical (low) level and then signal the robotic lawnmower 100 to stop operating. This ensures that the robotic lawnmower 100 stop inside the supplemental work area 305 even if the mobile signal generator 315 runs out of power. In such an embodiment the robotic lawnmower 100 is configured to receive such signalling from the mobile signal generator and act accordingly, i.e. to stop operating.

It should be noted that the mobile signal generator 315 may be configured to signal the robotic lawnmower 100 regarding other commands as well.

In one embodiment, the mobile signal generator 315 is configured to signal the robotic lawnmower 100 through the communications interface 413. In one embodiment, the mobile signal generator 315 is configured to signal the robotic lawnmower 100 through transmitting a coded message through the boundary wire by adapting the supplemental control signal 325 accordingly. The robotic lawnmower 100 may thus sense the coded message as part of sensing the control signal and receive any command, such as a stop operating command.

Figure 6 shows a schematic view of sensed signal strength for two cases of a sensed signal strength dropping. The first case (dashed line) is when the robotic lawnmower 100 is close to the (boundary) wire emitting the (control) signal being sensed. As is known due to the sensed signal strength will experience a drastic increase/decrease in the immediate vicinity of the wire. This peak is however in most cases very short and is easily distinguishable from the other case (full line) where the signal strength suddenly drops from one steady level to a lower, but also steady, level (A to B). Thus by for example enabling the robotic lawnmower 100 to determine that a first signal level has been maintained (or at least that the sensed signal has been sensed above the first level) for a time period exceeding a threshold time followed by that a second signal level is maintained for a time period exceeding a second threshold, possibly the same, it may be concluded that the supplemental control signal has been dropped, and the robotic lawnmower should stop operation. IN the case that the determination is wrong, which is however, unlikely as the mobile signal generator - being battery operated - runs a much higher risk of dropping the signal, no safety standards are violated as the robotic lawnmower 100 is still within the overall work area 205.

## Claims

1. A mobile signal generator (315) arranged to provide a supplemental control signal (325) through a supplemental wire (320) for establishing a supplemental work area (320) for a robotic working tool (100), said mobile signal generator (315) being arranged without a charging unit for the robotic working tool (100), wherein the mobile signal generator (315) comprises a controller module (316) configured to establish the supplemental control signal (325) and wherein the mobile signal generator (315) is **characterized in that** it further comprises a magnetic sensor (416) arranged to sense the magnetic field generated by a control signal (225), wherein the controller module (316) is configured to establish the supplemental control signal (325) by receiving information regarding the control signal (225) through the magnetic sensor (416) and establish the supplemental control signal (325) to be the same as the control signal (225).

2. The mobile signal generator (315) according to claim 1, wherein the mobile signal generator (315) comprises a signal generator (415), arranged to generate the supplemental control signal (325), and a battery (317) for providing power to the signal generator (415).

3. The mobile signal generator (315) according to claim 1 or 2 further comprising a communication interface (413), wherein the controller module (316) is configured to establish the supplemental control signal (325) by receiving information regarding the supplemental control signal (225) through the communication interface (413) from a charging station (210) and/or a user.

4. The mobile signal generator (315) according to any preceding claim, wherein the mobile signal generator (315) is arranged to determine a drastic drop in sensed signal strength and in response thereto stop operation.

5. The mobile signal generator (315) according to any preceding claim, wherein the mobile signal generator (315) is arranged to determine that a critical battery level has been reached and in response thereto signal a stop command to the robotic working tool (100).

6. The mobile signal generator (315) according to any preceding claim, wherein the mobile signal generator (315) is arranged to adapt the strength of the supplemental control signal (325) based on a length of the supplemental boundary wire (320).

7. The mobile signal generator (315) according to any preceding claim, wherein the mobile signal generator (315) comprises two ports (414) for connecting a single supplemental boundary wire (320).

8. The mobile signal generator (315) according to any preceding claim, wherein the mobile signal generator (315) is arranged outside the supplemental work area (305) when in operation.

9. The mobile signal generator (315) according to any preceding claim, wherein the mobile signal generator (315) is arranged to be used in a robotic working tool system (300) comprising a signal generator (215), arranged to generate and transmit a control signal (225) through a boundary wire (220), the robotic working tool (100) and a charging station (210) for charging the robotic working tool (100) in.

10. The mobile signal generator (315) according to any preceding claim, wherein the robotic working tool (100) is a robotic lawnmower (100).

11. A method for use in a mobile signal generator (315) arranged to provide a supplemental control signal (325) through a supplemental wire (320) for establishing a supplemental work area (320) for a robotic working tool (100), said mobile signal generator (315) being arranged without a charging unit for the robotic working tool (100), the method comprising
establishing (510) the supplemental control signal (325) and transmitting (520) the supplemental control signal (325), wherein the mobile signal generator (315) comprises a controller module (316) configured to establish the supplemental control signal (325) and wherein the method is **characterized in that** the mobile signal generator (315) further comprises a magnetic sensor (416) arranged to sense the magnetic field generated by a control signal (225), and wherein the method comprises the controller module (316) establishing the supplemental control signal (325) by receiving information regarding the control signal (225) through the magnetic sensor (416) and establishing the supplemental control signal (325) to be the same as the control signal (225).

## Patentansprüche

1. Mobilsignalgenerator (315), der angeordnet ist, um ein zusätzliches Steuersignal (325) über einen zusätzlichen Draht (320) bereitzustellen, um einen zusätzlichen Arbeitsbereich (320) für ein Roboterarbeitswerkzeug (100) einzurichten, wobei der Mobilsignalgenerator (315) ohne eine Ladeeinheit für das Roboterarbeitswerkzeug (100) angeordnet ist, wobei der Mobilsignalgenerator (315) ein Steuermodul (316) umfasst, das konfiguriert ist, um das zusätzliche Steuersignal (325) einzurichten, und wobei der Mobilsignalgenerator (315)
**dadurch gekennzeichnet ist, dass** er ferner einen Magnetsensor (416) umfasst, der angeordnet ist, um das Magnetfeld zu erfassen, das durch ein Steuersignal (225) erzeugt wird, wobei das Steuermodul (316) konfiguriert ist, um das zusätzliche Steuersignal (325) durch ein Empfangen von Informationen bezüglich des Steuersignals (225) über den Magnetsensor (416) einzurichten und das zusätzliche Steuersignal (325) als dasselbe wie das Steuersignal (225) einzurichten.

2. Mobilsignalgenerator (315) nach Anspruch 1, wobei der Mobilsignalgenerator (315) einen Signalgenerator (415), der angeordnet ist, um das zusätzliche Steuersignal (325) zu erzeugen, und eine Batterie (317) zum Versorgen des Signalgenerators (415) mit Leistung umfasst.

3. Mobilsignalgenerator (315) nach Anspruch 1 oder 2, ferner umfassend eine Kommunikationsschnittstelle (413), wobei das Steuermodul (316) konfiguriert ist, um das zusätzliche Steuersignal (325) durch das Empfangen von Informationen bezüglich des zusätzlichen Steuersignals (225) über die Kommunikationsschnittstelle (413) von einer Ladestation (210) und/oder einem Benutzer einzurichten.

4. Mobilsignalgenerator (315) nach einem der vorstehenden Ansprüche, wobei der Mobilsignalgenerator (315) angeordnet ist, um einen drastischen Abfall in einer erfassten Signalstärke zu erfassen und als Reaktion darauf den Betrieb zu stoppen.

5. Mobilsignalgenerator (315) nach einem der vorstehenden Ansprüche, wobei der Mobilsignalgenerator (315) angeordnet ist, um zu bestimmen, dass ein kritischer Batteriestand erreicht wurde und als Reaktion darauf einen Stoppbefehl an das Roboterarbeitswerkzeug (100) zu signalisieren.

6. Mobilsignalgenerator (315) nach einem der vorstehenden Ansprüche, wobei der Mobilsignalgenerator (315) angeordnet ist, um die Stärke des zusätzlichen Steuersignals (325) basierend auf einer Länge des zusätzlichen Begrenzungsdrahts (320) anzupassen.

7. Mobilsignalgenerator (315) nach einem der vorstehenden Ansprüche, wobei der Mobilsignalgenerator (315) zwei Anschlüsse (414) zum Verbinden eines einzelnen zusätzlichen Begrenzungsdrahts (320) umfasst.

8. Mobilsignalgenerator (315) nach einem der vorstehenden Ansprüche, wobei der Mobilsignalgenerator (315), wenn in Betrieb, außerhalb des zusätzlichen Arbeitsbereichs (305) angeordnet ist.

9. Mobilsignalgenerator (315) nach einem der vorstehenden Ansprüche, wobei der Mobilsignalgenerator (315) angeordnet ist, um in einem Roboterarbeitswerkzeugsystem (300) verwendet zu werden, umfassend einen Signalgenerator (215), der angeordnet ist, um ein Steuersignal (225) über einen Begrenzungsdraht (220) zu erzeugen und zu übertragen, das Roboterarbeitswerkzeug (100) und eine Ladestation (210) zum Aufladen des Roboterarbeitswerkzeugs (100).

10. Mobilsignalgenerator (315) nach einem der vorstehenden Ansprüche, wobei das Roboterarbeitswerkzeug (100) ein Roboter-Rasenmäher (100) ist.

11. Verfahren zur Verwendung in einem Mobilsignalgenerator (315), der angeordnet ist, um ein zusätzliches Steuersignal (325) über einen zusätzlichen Draht (320) bereitzustellen, zum Einrichten eines zusätzlichen Arbeitsbereichs (320) für ein Roboterarbeitswerkzeug (100), wobei der Mobilsignalgenerator (315) ohne eine Ladeeinheit für das Roboterarbeitswerkzeug (100) angeordnet ist, das Verfahren umfassend
Einrichten (510) des zusätzlichen Steuersignals (325) und Übertragen (520) des zusätzlichen Steuersignals (325), wobei der Mobilsignalgenerator (315) ein Steuermodul (316) umfasst, das konfiguriert ist, um das zusätzliche Steuersignal (325) einzurichten, und wobei das Verfahren **dadurch gekennzeichnet ist, dass** der Mobilsignalgenerator (315) ferner einen Magnetsensor (416) umfasst, der angeordnet ist, um das Magnetfeld zu erfassen, das durch ein Steuersignal (225) erzeugt wird, und wobei das Verfahren das Steuermodul (316) umfasst, das das zusätzliche Steuersignal (325) durch das Empfangen von Informationen bezüglich des Steuersignals (225) über den Magnetsensor (416) einrichtet und das zusätzliche Steuersignal (325) als dasselbe wie das Steuersignal (225) einrichtet.

## Revendications

1. Générateur de signal mobile (315) conçu pour fournir un signal de commande supplémentaire (325) par le biais d'un fil supplémentaire (320) pour établir une zone de travail supplémentaire (320) pour un outil de travail robotisé (100), ledit générateur de signal mobile (315) étant conçu sans unité de charge pour l'outil de travail robotisé (100), dans lequel le générateur de signal mobile (315) comprend un module de dispositif de commande (316) configuré pour établir le signal de commande supplémentaire (325) et dans lequel le générateur de signal mobile (315) est **caractérisé en ce qu'il** comprend en outre un capteur magnétique (416) conçu pour détecter le champ magnétique généré par un signal de commande (225), dans lequel le module de dispositif de commande (316) est configuré pour établir le signal de commande supplémentaire (325) en recevant des informations concernant le signal de commande (225) par le biais du capteur magnétique (416) et établir le signal de commande supplémentaire (325) pour qu'il soit le même que le signal de commande (225).

2. Générateur de signal mobile (315) selon la revendication 1, dans lequel le générateur de signal mobile (315) comprend un générateur de signal (415), conçu pour générer le signal de commande supplémentaire (325), et une batterie (317) pour alimenter le générateur de signal (415).

3. Générateur de signal mobile (315) selon la revendication 1 ou 2 comprenant en outre une interface de communication (413), dans lequel le module de dispositif de commande (316) est configuré pour établir le signal de commande supplémentaire (325) en recevant des informations concernant le signal de commande supplémentaire (225) par le biais de l'interface de communication (413) provenant d'une station de charge (210) et/ou d'un utilisateur.

4. Générateur de signal mobile (315) selon l'une quelconque revendication précédente, dans lequel le générateur de signal mobile (315) est conçu pour déterminer une chute drastique d'une intensité de signal détecté et, en réponse à cela, arrêter le fonctionnement.

5. Générateur de signal mobile (315) selon l'une quelconque revendication précédente, dans lequel le générateur de signal mobile (315) est conçu pour déterminer qu'un niveau de batterie critique a été atteint et, en réponse à cela, signaler une instruction d'arrêt à l'outil de travail robotisé (100).

6. Générateur de signal mobile (315) selon l'une quelconque revendication précédente, dans lequel le générateur de signal mobile (315) est conçu pour adapter l'intensité du signal de commande supplémentaire (325) sur la base de la longueur du fil de délimitation supplémentaire (320).

7. Générateur de signal mobile (315) selon l'une quelconque revendication précédente, dans lequel le générateur de signal mobile (315) comprend deux ports (414) pour connecter un seul fil de délimitation supplémentaire (320).

8. Générateur de signal mobile (315) selon l'une quelconque revendication précédente, dans lequel le générateur de signal mobile (315) est disposé à l'extérieur de la zone de travail supplémentaire (305) lorsqu'il est en fonctionnement.

9. Générateur de signal mobile (315) selon l'une quelconque revendication précédente, dans lequel le générateur de signal mobile (315) est conçu pour être utilisé dans un système d'outil de travail robotisé (300) comprenant un générateur de signal (215), conçu pour générer et transmettre un signal de commande (225) par le biais d'un fil de délimitation (220), de l'outil de travail robotisé (100) et d'une station de charge (210) pour charger l'outil de travail robotisé (100).

10. Générateur de signal mobile (315) selon l'une quelconque revendication précédente, dans lequel l'outil de travail robotisé (100) est une tondeuse à gazon robotisé (100).

11. Procédé à utiliser dans un générateur de signal mobile (315) conçu pour fournir un signal de commande supplémentaire (325) par le biais d'un fil supplémentaire (320) pour établir une zone de travail supplémentaire (320) pour un outil de travail robotisé (100), ledit générateur de signal mobile (315) étant conçu sans unité de charge pour l'outil de travail robotisé (100), le procédé comprenant
l'établissement (510) du signal de commande supplémentaire (325) et la transmission (520) du signal de commande supplémentaire (325), dans lequel le générateur de signal mobile (315) comprend un module de dispositif de commande (316) configuré pour établir le signal de commande supplémentaire (325) et dans lequel le procédé est **caractérisé en ce que** le générateur de signal mobile (315) comprend en outre un capteur magnétique (416) conçu pour détecter le champ magnétique généré par un signal de commande (225), et dans lequel le procédé comprend l'établissement du signal de commande supplémentaire (325) par le module de dispositif de commande (316) en recevant des informations concernant le signal de commande (225) par le biais du capteur magnétique (416) et en établissant le signal de commande supplémentaire (325) comme étant le même que le signal de commande (225).
